# EUROPEAN PATENT APPLICATION

(11) **EP 4 656 464 A1**
(43) Date of publication of application: **03.12.2025**
(21) Application number: 24178996.5
(22) Date of filing: 30.05.2024
(51) Int. Cl.: B60R 21/017

(54) **SELF-POWERED PYROTECHNIC FUSE SYSTEM FOR MOTOR VEHICLES, AND MOTOR VEHICLE COMPRISING SUCH PYROTECHNIC FUSE SYSTEM**

(71) Applicant: Volvo Truck Corporation, 405 08 Göteborg (SE)
(72) Inventor: PATEL, Nimish, GREENSBORO, 27455 (US); DAS, Abhijit, HIGH POINT, 27265 (US)
(74) Representative: Lavoix

(57) **Abstract**

A pyrotechnic fuse system (1) suitable to be installed onboard a motor vehicle, comprising:
- a pyro switch (2) suitable to be triggered for interrupting flow of power along an associated conductor (100) of the motor vehicle;
- a control circuit (3) for controlling at least the pyro switch (2);
- a temperature sensor (4) which detects one or more temperature values along the conductor (100) and provides the control circuit (3) with corresponding one or input signals (Sᵢₙ) indicative each of the one or more temperature values detected; wherein the temperature sensor (4) powers at least the control circuit (3) by means of said one or more input signals (Sᵢₙ).

## Description

### TECHNICAL FIELD

The disclosure relates generally to the field of motor vehicles. In particular aspects, the disclosure relates to a pyrotechnic fuse system for motor vehicles, and to a motor vehicle comprising such pyrotechnic fuse system. The disclosure can be applied to any type of vehicle, in particular to electric or hybrid vehicles, such as cars, heavy-duty vehicles, e.g. trucks, buses, and construction equipment, among other vehicle types. Although the disclosure may be described with respect to a particular vehicle, the disclosure is not restricted to any particular vehicle.

### BACKGROUND

Known pyrotechnic fuse systems used in motor vehicles, in particular electric vehicles (EVs) or hybrid vehicles, to interrupt the flow of power along an associated conductor, use a current sensor and an internal battery to power their control electronics.

This internal battery has a limited shelf life that makes known products subject to unavoidable maintenance interventions.

### SUMMARY

According to a first aspect of the disclosure, there is provided a pyrotechnic fuse system suitable to be installed onboard a motor vehicle, comprising:
- a pyro switch suitable to be triggered for interrupting flow of power along a conductor of the motor vehicle;
- a control circuit for controlling at least the pyro switch;
- a temperature sensor which detects one or more temperature values along the conductor and provides the control circuit with corresponding one or more input signals indicative each of the one or more temperature values detected;
wherein the temperature sensor powers at least the control circuit by means of said one or more input signals. The first aspect of the disclosure may seek to realize a self-powered pyrotechnic fuse system. A technical benefit may include eliminating or at least reducing maintenance interventions at least for what concerns the internal powering part(s).

Optionally in some examples, including in at least one preferred example, the temperature sensor is a thermo-electric generator. In this way, as a temperature sensor and source for powering the control circuit there may be used a simple and effective device.

Optionally in some examples, including in at least one preferred example, the thermo-electric generator is an onboard thermo-electric generator of the vehicle. In this way, a device already used onboard the vehicle for other purposes may be purposively and efficiently exploited at the same time as a temperature detecting sensor and power source.

Optionally in some examples, including in at least one preferred example, the onboard thermo-electric generator of the vehicle in particular may be constituted by or may be part of an onboard high power heater of the vehicle.

Optionally in some examples, including in at least one preferred example, the control circuit triggers the pyro switch when at least one the temperature values detected by the temperature sensor reaches a preset threshold. In this way, interventions protecting against malfunctioning or faults may be timely effected.

Optionally in some examples, including in at least one preferred example, the pyrotechnic fuse system further comprises a rechargeable battery for supplying at least said control circuit. In this way, the pyrotechnic fuse system may be optionally provided with an additional and alternative back-up source of power.

Optionally in some examples, including in at least one preferred example, the pyrotechnic fuse system comprises a DC-DC converter disposed downward the temperature sensor. In this way, the voltage output of the temperature sensor may be brought at the needed level for powering the control circuit and the back-up rechargeable battery when used.

According to a second aspect of the disclosure, there is provided a motor vehicle comprising at least one pyrotechnic fuse system as above indicated and in particular as described hereinafter and recited in one or more of the correspond appended claims.

Optionally in some examples, including in at least one preferred example, the vehicle is a fully electric or hybrid motor vehicle. In this way, the above advantages and technical results may be beneficially enjoyed for onboard protection by any suitable type of motor vehicle, and in particular by any suitable type of electric or hybrid motor vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

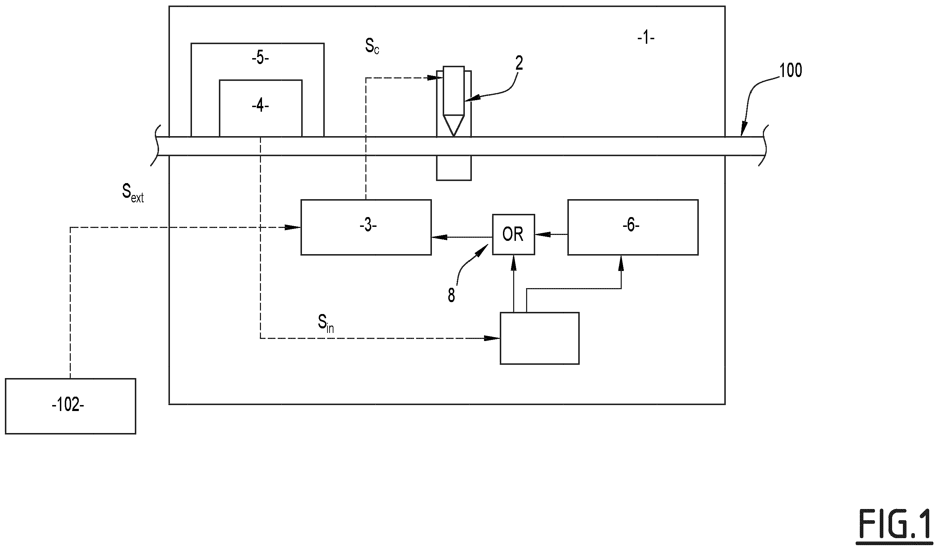

Examples are described in more detail below with reference to the only appended drawing of FIG. 1 that schematically illustrates a diagram of a pyrotechnic fuse system according to an example.

### DETAILED DESCRIPTION

The detailed description set forth below provides information and examples of the disclosed technology with sufficient detail to enable those skilled in the art to practice the disclosure.

As previously indicated, known pyrotechnic fuse devices or system use an internal battery to power their control electronics; hence, such known solutions are subject to unavoidable maintenance interventions for replacing the battery for example when it reaches its end of life.

The present disclosure provides pyrotechnic fuse system (or device) wherein a temperature sensor act as a sensor as well as provides needed power source to the control logic circuit. The output of the temperature is for example proportional to changes in temperature. The control logic circuit monitors the temperature and triggers the pyro switch at a set threshold. At the same time, the same voltage generated from the temperature sensor is used to power the internal electronics of the pyro control logic rendering in principle this device maintenance free at least from the powering point of view.

In more details, and as illustrated in the example of figure 1, the pyrotechnic fuse system according to the disclosure, indicated by the overall reference number 1, comprises:
- a pyro switch 2 suitable to be triggered for interrupting flow of power along an associated conductor 100 of the motor vehicle;
- a control circuit 3 for controlling at least the pyro switch 2;
- a temperature sensor 4 configured to detect one or more temperature values along the conductor 100 and to provide the control circuit 3 with corresponding one or input signals Sᵢₙ indicative each of the one or more temperature values detected, wherein the temperature sensor 4 is configured to power at least the control circuit 3 by means of the same one or more input signals Sᵢₙ.

Hence, according to the disclosure, there is provided a self-powered pyrotechnic fuse system which uses a sensor configured to act as a temperature sensor and to provide the control circuit with an input signal indicative of the temperature on the power conductor. The temperature sensor also powers the control circuit by means of the same input signal Sᵢₙ.

For instance, the conductor 100 can be a cable connected to an onboard battery that provides electric power for the vehicle.

The pyro switch 2 can be any type of pyro switch, e.g. a pyro fuse, available on the market and suitable for the pyrotechnic fuse system according to the present disclosure

The control circuit 3 can be constituted by or comprised in an electronic control unit, or can be a separate electronic controller or logic control circuit specifically devised for the functionalities foreseen for it within the system 1 according to the present disclosure.

The control circuit 3 is adapted for example to execute instructions from a computer-readable medium to perform any of the functions or processing described herein. While the control circuit 3 is represented in FIG. 1 by a single box, it may include any collection of devices that individually or jointly execute a set (or multiple sets) of instructions to perform any of the functions or processing discussed herein. Accordingly, any reference in the disclosure and/or claims to a control circuit or logic control circuit 3 or equivalently to an electronic controller or electronic control unit (ECU), etc., includes reference to one or more such devices to individually or jointly execute a set (or multiple sets) of instructions to perform such functions or processing.

In particular, the control circuit 3 may comprise at least one computing device or electronic device capable of including firmware, hardware, and/or executing software instructions to implement the functionality/processing described herein. The control circuit 3 5 may include processing circuitry (e.g., processing circuitry including one or more processor devices or control units), a memory, such as the data storage. The processing circuitry may include any number of hardware components for conducting data or signal processing or for executing computer code stored in a memory. The processing circuitry may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry may further include computer executable code that controls operation of the programmable device.

In one possible example, the temperature sensor 4 is a thermo-electric generator (TEG).

In particular, according to a possible example, the thermo-electric generator 4 is an onboard thermo-electric generator 4 of the vehicle.

In yet a possible example, the thermo-electric generator 4 is constituted by or is part of an onboard high power heater 5 of the vehicle.

In one possible example, the control circuit 3 is configured to output a command signal S_{c} thereby triggering the pyro switch 2, thus interrupting the flow of power along the conductor 100, when at least one the temperature values detected by the temperature sensor 4 reaches a preset threshold.

In one possible embodiment, as schematically illustrated in the example of figure 1, the control circuit 3 may receive signals Sₑₓₜ, for instance a command signal for triggering the pyro switch 2, also by an electronic control unit (ECU) external to the pyro switch system 1.

Such external electronic control unit can be for example the ECH of the vehicle, schematically indicated in figure 1 by the reference number 102.

In one possible embodiment, the pyrotechnic fuse system 1 may further comprises a rechargeable battery 6 for supplying at least the control circuit 3.

Accordingly, the rechargeable battery can be used for example as a back-up power source in alternative to the temperature sensor 4, e.g. when the voltage output from the temperature sensor 4, i.e. the input signal Sᵢₙ is for whatever reason not used for powering the control circuit 3.

In one possible example, the temperature sensor 4 is configured to charge also the back-up rechargeable battery 6 with the same one or more input signals Sᵢₙ, i.e. the voltage output from the temperature sensor 4 itself.

In one possible example, the pyrotechnic fuse system 1 further comprising a DC-DC converter, schematically represented in the example of figure 1 with the reference number 7, which is disposed downstream the temperature sensor 4.

In practice, the DC-DC converter 7 is positioned along the path routing the signals output from the temperature sensor 4 to the control circuit 3 and the rechargeable battery 6 if used.

The voltage output of the temperature sensor 4 is adapted by the DC-DC converter 7 to a level adequate for powering the control circuit 3 and the rechargeable battery 6 when used.

Hence, according to this example, the control circuit 3 may be powered directly by the temperature sensor 4 and also by the rechargeable battery 6. In figure 7, a logic OR block 8 is schematically represented separately from the control circuit 3 for the sake of illustration. However, such OR block can be part of the control circuit 3.

The pyrotechnic fuse system 1 according to the disclosure can be easily and conveniently installed for protection purposes onboard of new motor vehicles, as well as onboard of existing vehicles, such as fully electric or hybrid motor vehicles.

Hence, according to possible aspects, the present disclosure provides the following possible examples.

Example 1: A pyrotechnic fuse system 1 suitable to be installed onboard a motor vehicle, comprising:
- a pyro switch 2 suitable to be triggered for interrupting flow of power along an associated conductor 100 of the motor vehicle;
- a control circuit 3 for controlling at least the pyro switch 2;
- a temperature sensor 4 which detects one or more temperature values along the conductor 100 and provides the control circuit 3 with corresponding one or input signals Sᵢₙ indicative each of the one or more temperature values detected; wherein the temperature sensor 4 powers at least the control circuit 3 by means of said one or more input signals Sᵢₙ.

Example 2: The pyrotechnic fuse system 1 as in example 1, wherein the temperature sensor 4 is a thermo-electric generator.

Example 3: The pyrotechnic fuse system 1 as in example 2, wherein thermo-electric generator 4 is an onboard thermo-electric generator 4 of the vehicle.

Example 4: The pyrotechnic fuse system 1 as in any of examples 1 and 2, wherein the thermo-electric generator 4 is constituted by or is part of an onboard high power heater 5 of the vehicle.

Example 5: The pyrotechnic fuse system 1 as in any of the preceding examples, wherein the control circuit 3 triggers the pyro switch 2 when at least one the temperature values detected by the temperature sensor 4 reaches a preset threshold.

Example 6: The pyrotechnic fuse system 1 as in any of the preceding examples, further comprising a rechargeable battery 6 for supplying at least said control circuit 3.

Example 7: The pyrotechnic fuse system 1 as in example 6, wherein the temperature sensor 4 charges the rechargeable battery 6 also with said one or more input signals Sᵢₙ.

Example 8: The pyrotechnic fuse system 1 according to example as in example 7, further comprising a DC-DC converter 7 disposed downward the temperature sensor 4.

Example 9: A motor vehicle comprising at least one pyrotechnic fuse system 1 as in any of the preceding examples.

Example 10: The motor vehicle as in example 9, wherein the vehicle is a fully electric or hybrid motor vehicle.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" or "downstream" or upstream" may be used herein to describe a relationship of one element to another element as illustrated in FIG. 1. It will be understood that these terms and those discussed above are intended to encompass different orientations of the device in addition to the orientation depicted in the figure. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

For example, when the term "adapted" or "arranged" or "configured" or any similar/equivalent term is used herein while referring to any component as a whole, or to any part of a component, or to a combination of components, it has to be understood that it may mean and encompass correspondingly either the structure, and/or configuration and/or form and/or positioning of the related component or part thereof, or combinations, such term refers to.

In particular, for electronic and/or software means, each of the above listed terms may means and encompass electronic circuitry or parts thereof, as well as stored, embedded or running software codes and/or routines, algorithms, or complete programs, suitably designed for achieving the technical result and/or the functional performances for which such means are devised for.

It is to be understood that the present disclosure is not limited to the aspects described above and illustrated in the drawing; rather, the skilled person will recognize that many changes and modifications may be made within the scope of the present disclosure and appended claims. In the drawing and description, there have been disclosed aspects for purposes of illustration only and not for purposes of limitation, the scope of the disclosure being set forth in the following claims. It should also be noted that in order to clearly and concisely describe the present disclosure, the drawings may not necessarily be to scale and certain features of the disclosure may be shown in somewhat schematic form.

## Claims

1. A pyrotechnic fuse system (1) suitable to be installed onboard a motor vehicle, comprising:
- a pyro switch (2) suitable to be triggered for interrupting flow of power along an associated conductor (100) of the motor vehicle;
- a control circuit (3) for controlling at least the pyro switch (2);
- a temperature sensor (4) which detects one or more temperature values along the conductor (100) and provides the control circuit (3) with corresponding one or input signals (Sᵢₙ) indicative each of the one or more temperature values detected; wherein the temperature sensor (4) powers at least the control circuit (3) by means of said one or more input signals (Sᵢₙ).

2. The pyrotechnic fuse system (1) as in claim 1, wherein the temperature sensor (4) is a thermo-electric generator.

3. The pyrotechnic fuse system (1) as in claim 2, wherein thermo-electric generator (4) is an onboard thermo-electric generator (4) of the vehicle.

4. The pyrotechnic fuse system (1) as in any of claims 1 and 2, wherein the thermo-electric generator (4) is constituted by or is part of an onboard high power heater (5) of the vehicle.

5. The pyrotechnic fuse system (1) as in any of the preceding claims, further wherein the control circuit (3) triggers the pyro switch (2) when at least one the temperature values detected by the temperature sensor (4) reaches a preset threshold.

6. The pyrotechnic fuse system (1) as in any of the preceding claims, further comprising a rechargeable battery (6) for supplying at least said control circuit (3).

7. The pyrotechnic fuse system (1) as in claim 6, wherein the temperature sensor (4) charges the rechargeable battery (6) also with said one or more input signals (Sᵢₙ).

8. The pyrotechnic fuse system (1) as in claim 7, further comprising a DC-DC converter (7) disposed downward the temperature sensor (4).

9. A motor vehicle comprising at least one pyrotechnic fuse system (1) as in any of the preceding claims.

10. The motor vehicle as in claim 9, wherein the vehicle is a fully electric or hybrid motor vehicle.
